# EUROPEAN PATENT APPLICATION

(11) **EP 3 288 333 A1**
(43) Date of publication of application: **28.02.2018**
(21) Application number: 17177779.0
(22) Date of filing: 26.06.2017
(51) Int. Cl.: H04W 84/18, H04W 40/24

(54) **METHOD OF PACKET TRANSMISSION IN A MESH NETWORK**

(30) Priority: 23.08.2016 US 201662378220 P
(71) Applicant: Quantek, Inc., Hsinchu City 300 (TW)
(72) Inventor: WANG, Sheng, Taipei City 104 (TW)
(74) Representative: Becker Kurig Straus

(57) **Abstract**

A method of packet transmission for a supervisor node in a mesh network with connectionless packet flooding transmission is disclosed. The method comprises requesting a neighbor list of a node of the mesh network, wherein the neighbor list indicates at least a neighbor node of the mesh network which is distributed in a coverage of the node, obtaining the neighbor list from every nodes of the mesh network, establishing a route table for every nodes of the mesh network according to the obtained neighbor lists, and establishing a transmission route from a source node to a destination node of the mesh network according to the route table when a request for transmitting a large amount of data to the destination node is received from the source node.

## Description

### Field of the Invention

The application relates to a method of sequential packet transmission over the mesh network for enhancing data rate.

### Background of the Invention

A mesh network is a communications network made up of radio nodes organized in a mesh topology. Mesh networks can be implemented with various wireless technologies including 802.11, 802.15, 802.16, cellular technologies and need not be restricted to any one technology or protocol. Recently, mesh network is applied for Internet of Things (IoT) device connection. This makes it much simpler to build a network of connected things and is, as a bonus, relatively inexpensive.

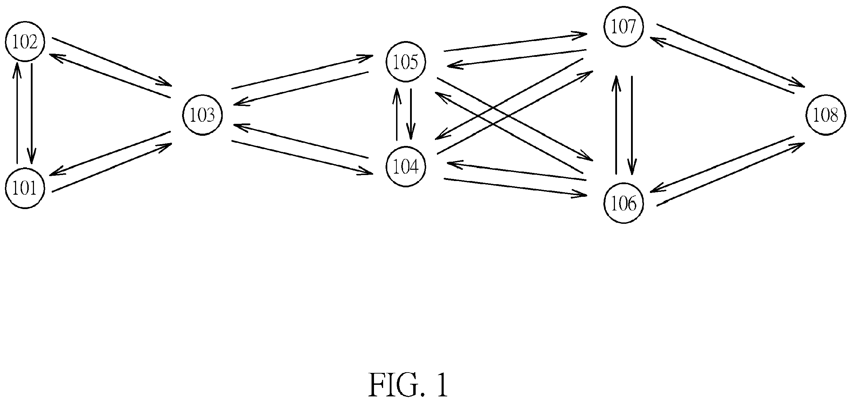

FIG. 1 is a schematic diagram of a packet flooding mesh network according to the prior art. There are several nodes (i.e. communication devices) in this mesh network. Each node can communicate wirelessly with the other nodes that are in effective range of it. Packet flooding topology is adapted in the mesh network, where every member node of the mesh network rebroadcasts the received data packet until all the member nodes receive the data packet. For example, the node 101 transmits a packet, that packet can be received by nodes 102 and 103 which are within the broadcasting range of the node 101. Then, the node 103 rebroadcasts the packet received from the node 101, so that the packet can be received by the node 104, which is out of range of node 101. With the same manner, the packet from the source node 101 can be transmitted to the destination node 108 which is out of the coverage area of node 101.

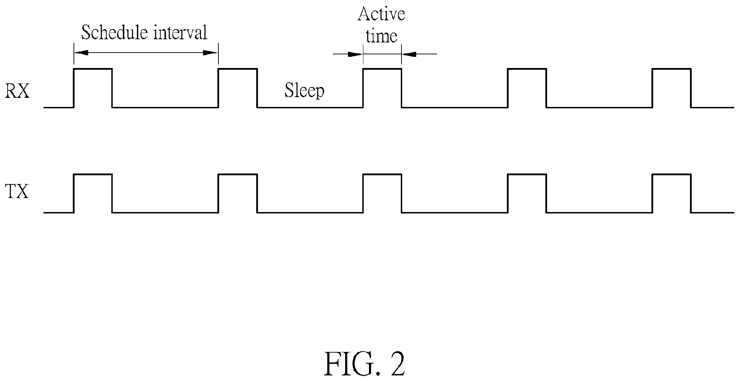

However, there are several cons in packet flooding mesh network. First, flood routing implies that all devices must listen continuously for signals from other devices in the network, otherwise there is a risk that data packet will be lost by deice. Continuous listening will surely increases power consumption. One way to overcome this issue is that every device only keeps active within a time period, and keeps sleep in other time. Reference is made to FIG. 2, which illustrates an example of a schedule interval of a mesh network according to the prior art. The schedule interval includes an active time period and a sleep time period. As well known, the longer the sleep time period, the better the power saving effect is. In addition, packet flooding over the mesh network always keeps a long time schedule interval for each device to listen or broadcast data packet during the active time period. Therefore, conventional schedule interval causes a very low transmission data rate.

Although slow schedule and shorter active time are good for saving power, slow schedule causes very low data transmission rate and short active time period causes high transmission packet collision possibility. For example, every device randomly broadcasts the packet within the active time period in order to prevent data collision. The shorter the active time period, the higher the transmission packet collision possibility occurs. Besides, the packet is broadcasted and received by many devices in a broadcasting range of the transmitting device, and the devices receiving the packet will rebroadcast it, which causes the packet arrived at the destination device out of order. In other words, the packet might go through different routes to arrive at destination device with packet flooding transmission topology, and thus the packet may be not received by the destination device in sequence.

### Summary of the Invention

The present application aims at providing a method of packet transmission in the mesh network to solve the above problems.

This is achieved by a method of packet transmission in the mesh network according to claims 1 and 9. The dependent claims pertain to corresponding further developments and improvements.

As will be seen more clearly from the detailed description following below, the claimed method of packet transmission for a supervisor node in a mesh network with connectionless packet flooding transmission comprises requesting a neighbor list of a node of the mesh network, wherein the neighbor list indicates at least a neighbor node of the mesh network which is distributed in a coverage of the node, obtaining the neighbor list from every nodes of the mesh network, establishing a route table for every nodes of the mesh network according to the obtained neighbor lists, and establishing a transmission route from a source node to a destination node of the mesh network according to the route table when a request for transmitting a large amount of data to the destination node is received from the source node.

### Brief Description of the Drawings

FIG. 1 is a schematic diagram of a packet flooding mesh network according to the prior art.
FIG. 2 is a schematic diagram of a schedule interval according to the prior art.
FIG. 3 is a schematic diagram of a communication device according to one embodiment of the present disclosure.
FIG. 4 is a flowchart of a process according to one embodiment of the present disclosure.
FIGs. 5A-5C are schematic diagrams of neighbor list establishment according to one embodiment of the present disclosure.
FIG. 6 is a schematic diagram of co-existence of an original mesh network and a virtual link network according to one embodiment of the present disclosure.
FIG. 7 is a schematic diagram of an active time of an original mesh network and a virtual link network according to one embodiment of the present disclosure.
FIGs. 8A-8D are schematic diagrams of the broadcasting packet flows over a virtual link network according to one embodiment of the present disclosure.
FIG. 9 is a schematic diagram of non-collision transmission methodology over a virtual link network according to one embodiment of the present disclosure.
FIG. 9A is a schematic diagram of full-duplex non-collision transmission methodology over a virtual link network according to one embodiment of the present disclosure.
FIG. 10 is a schematic diagram of transmission time slot assignment according to one embodiment of the present disclosure.
FIG. 11 is a schematic diagram of one source to two destinations transmission over a virtual link network according to one embodiment of the present disclosure.
FIG. 12 is a schematic diagram of a virtual link cancelation according to one embodiment of the present disclosure.
FIG. 13 is a schematic diagram of two independent virtual links co-existence according to one embodiment of the present disclosure.
FIG. 14 is a schematic diagram of a virtual link cancelation according to one embodiment of the present disclosure.
FIG. 15 is a schematic diagram of a power consumption and data rate comparison between a mesh network and a virtual link network.
FIG. 16 is a schematic diagram of home IOT devices over mesh network according to one embodiment of the present disclosure.

### Detailed Description

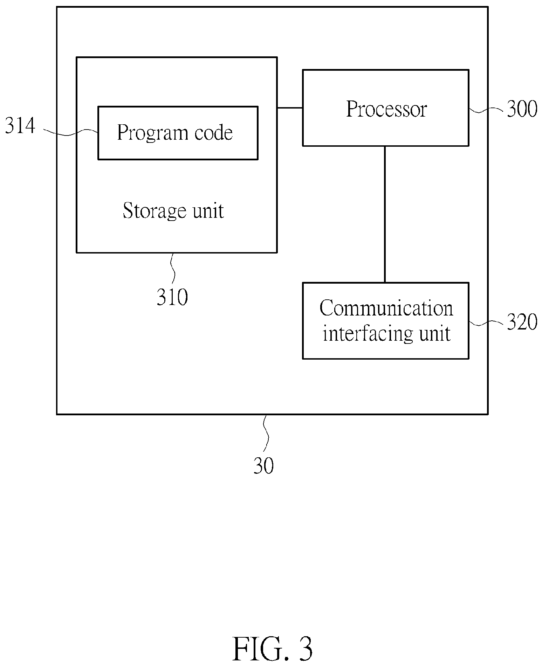

FIG. 3 is a schematic diagram of a communication device 30 according to one embodiment of the present disclosure. The communication device 30 can be any node of FIG. 1, and includes a processor 300, such as a microprocessor or Application Specific Integrated Circuit (ASIC), a storage unit 310 and a communication interfacing unit 320. The storage unit 310 may be any data storage device that can store a program code 314, for access by the processor 300. Examples of the storage unit 310 include but are not limited to a subscriber identity module (SIM), read-only memory (ROM), flash memory, random-access memory (RAM), CD-ROMs, magnetic tape, hard disk, and optical data storage device. The communication interfacing unit 320 is preferably a radio transceiver and can exchange wireless signals with another network device or mobile device according to processing results of the processor 300.

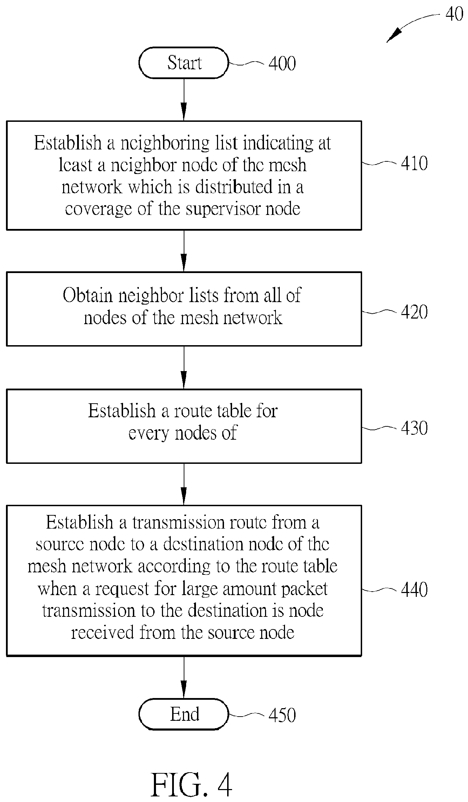

Reference is made to FIG. 4. A flowchart of a process 40 according to an embodiment of the present disclosure is illustrated. The process 40 could be utilized in the communication device 30 of FIG. 3 for packet transmission in the mesh network, so as to increase data rate efficiency and save power consumption. The process 40 may be compiled into a program code 314 to be stored in the storage unit 310, and may include the following steps:
- Step 400:: Start.
- Step 410:: Establish a neighboring list indicating at least a neighbor device of the mesh network which is distributed in a coverage of the communication device.
- Step 420:: Obtain neighbor lists from all of devices of the mesh network.
- Step 430:: Establish a route table for every devices of the mesh network according to the obtained neighbor lists.
- Step 440:: Establish a transmission route from a source device to a destination device of the mesh network according to the route table when a request for large amount packet transmission to the destination device is received from the source device.
- Step 450:: End.

According to the process 40, the communication device 30 establishes a transmission route for large amount packet transmission, wherein the transmission route presents a virtual link from the source device toward the destination device in the mesh network. In an embodiment, the transmission route may be the shortest distance between the source device and the destination device. In other embodiments, the transmission route may be a link with optimal transmission power or power status of devices.

In detail, the communication device 30 may be designed as a supervisor device of the mesh network. For example, in home automation IOT network, usually there is a hub device to communicate with other network, all the data will be transmitted to the hub in use case, such that only the hub device needs to be designed as supervisor device. Supervisor device needs to establish the route table with the best transmission hop to each device of the mesh network. When a device initiates a large data transmission, the supervisor device broadcast a command to request all member of the mesh network to reply its neighbor list. After receiving the neighbor list from other devices, supervisor device can establish the route table. In addition, supervisor device can send command to any device to request the neighbor list again, to re-build the route table.

If multiple transmission route are possible between source and destination, the supervisor device can make decision by the information in the neighbor list of each node, to selects an optimal route for large data transmission. For example, the information includes strength of RF power and/or power status. Strong RF power might be better for preventing RF interference. Power status such as the device is powered by power line or a battery. It might be better to choose a route with power-line device, not battery device to keep the battery device with longer life.

After the supervisor device selects an optima transmission route, it sends a command to devices which are in the route to activate the devices into a virtual link mode. Note that, devices in the optimal path can be seen as a virtual link network for large data transmission, and operated in a pre-defined schedule interval. In addition, the devices of virtual link still work in the original mesh network with the original schedule interval.

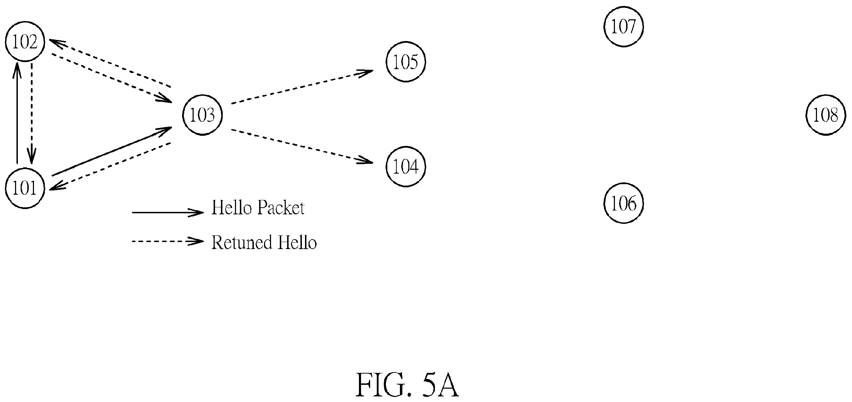

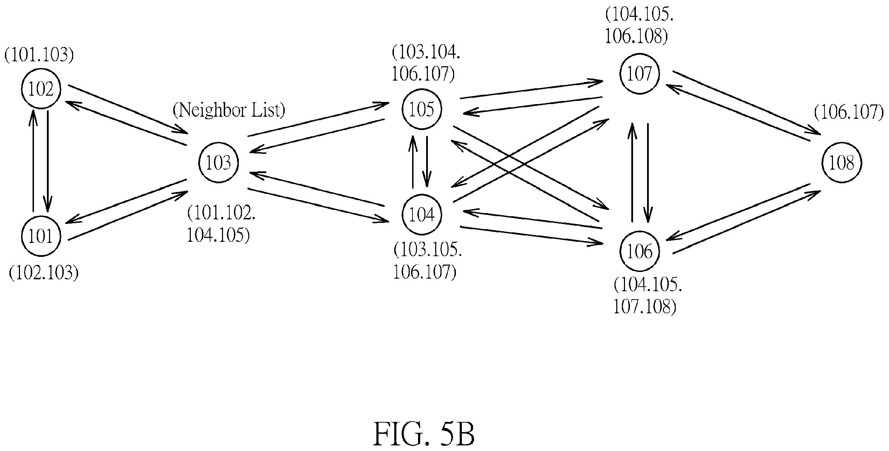

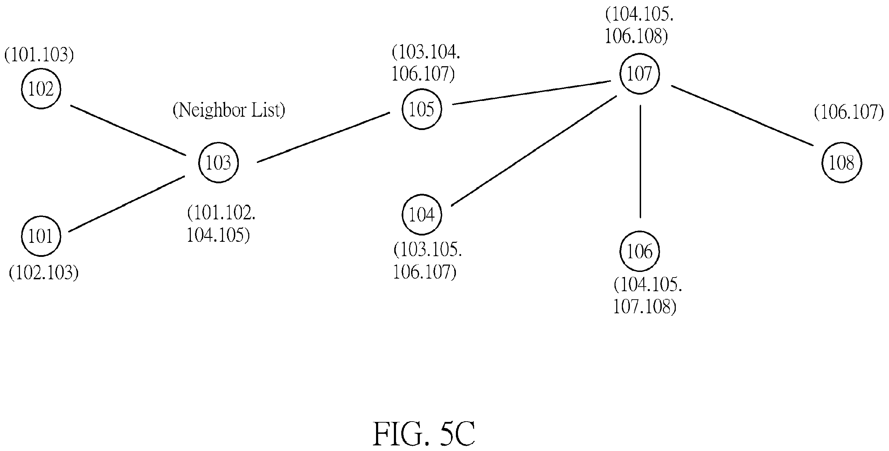

Detailed operation for the enhanced packet transmission procedure is as follows. Reference is made to FIGs. 5A-5C, which illustrate a neighbor list establishment according to one embodiment of the present disclosure. In FIG. 5A, the device 101 establishes its neighbor list by broadcasting a "Hello" packet to neighbor devices. Devices receiving the "Hello" packet will broadcast "return Hello" packet with its own identity. In this example, only the devices 102 and 103 are within the transmission range and will rebroadcast the "return Hello" packet with their own identity number. The device 101 receives the "return hello" packet and establishes its neighbor list including neighbor devices 102 and 103. It is noted that the device 101 may neglect the "return Hello" packet it received and will not re-broadcast it since the received "return Hello" packet is modified to include the identities of the neighbor devices. With the same manner, each device of the mesh network can establish its own neighbor list as shown in FIG. 5B. Note that, devices of the mesh network can re-build its neighbor list at any time, in case the member of the mesh network changes. In FIG. 5C, the device 107 is a supervisor device, and therefore is able to request neighbor lists from all of the devices 101-108, so as to establish the route table of the mesh network.

In other embodiments, the neighbor nodes 102 and 103 receive the "Hello" packet may report their battery or power-line status within the "return Hello" packet to the node 101. As a result, the neighbor list includes not only identity number of neighbor nodes, but also records the radio frequency (RF) power or power status from each neighbor node which may be useful in the route table establishment.

Based on the abovementioned, if the device 101 wants to transmit large amount data to the device 107, the device 101 broadcasts the request to the device 107, and thus the device 107 will decide the transmission route based on the route table and broadcast command to the devices on the transmission route, to activate a virtual link mode of the devices on the transmission route. It is noted that all of the request and command packet are sent with the conventional packet flooding transmission manner.

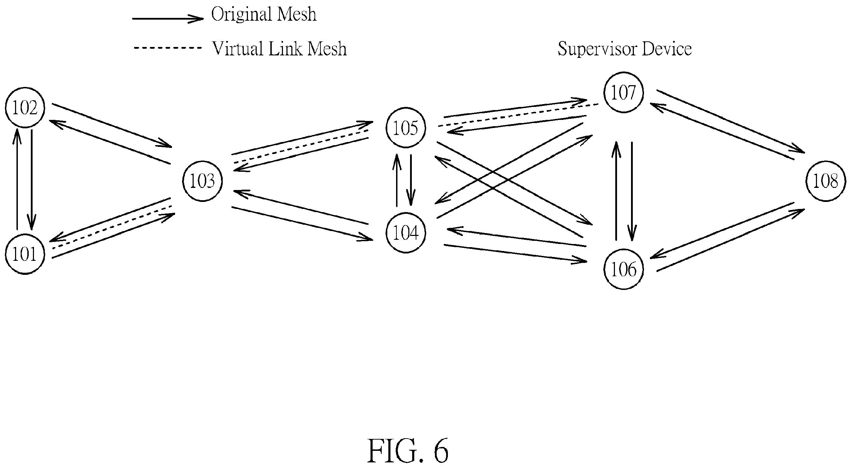

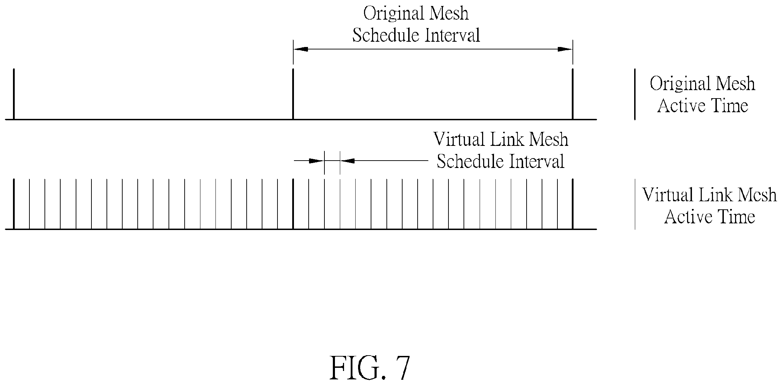

Reference is made to FIG. 6, which illustrates co-existence of an original mesh network and a virtual link network according to one embodiment of the present disclosure. The virtual link network includes partial members of the original mesh network. As shown in FIG. 6, a virtual link from the device 101 to the device 107 through the device 103 and the device 105 is established by the device 107. The devices within the virtual link network will activate the virtual link mode which indicates a faster schedule (i.e. 5ms) than the original schedule (i.e. 200ms) in the normal mode used in the original mesh network. Meanwhile, the devices within the virtual link network still keep the original schedule interval activity of the original mesh network. Reference is made to FIG. 7, which illustrates the schedules of original mesh network and virtual link network. The virtual link network is still belong to the original mesh network and therefore is complied with the schedule interval of the original mesh network. This means the device will work in original mesh network with the original schedule interval and also work in the virtual link mesh network with the virtual link schedule interval. However, with fast schedule of virtual link network, more packets can be transmitted during the same time period since the active time period of the virtual link schedule for packet broadcast occurs more often than the original schedule, namely short schedule interval. Therefore, if the schedule of virtual link network is 50 times of the original mesh network, the data rate will also be 50 times the data rate of the original mesh network.

In addition, with fast virtual link schedule, packet broadcast function of the devices of the original mesh network may be seen as that the supervisor device turns it off, but keeps it on for the devices of the virtual link network since the frequency of the active time period of the virtual link schedule is higher than the active time period of original schedule as shown in Fig. 7. In other words, the active time period of the original schedule may not appear while the active time period of the virtual link schedule occurs, which causes that the devices of the original mesh network do not wake up for packet broadcast or listening (i.e. in sleep state), whereas the devices of the virtual link network wake up for packet broadcast or listening.

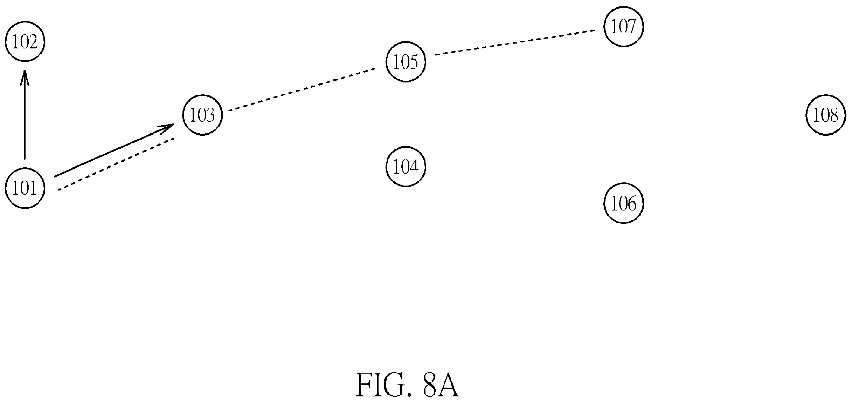

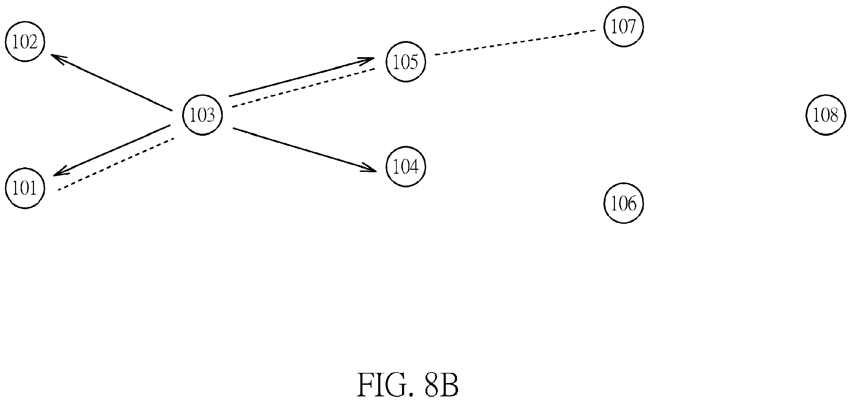

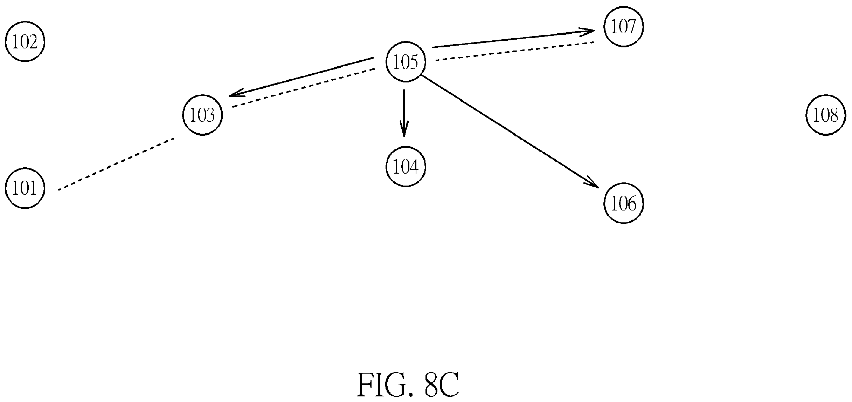

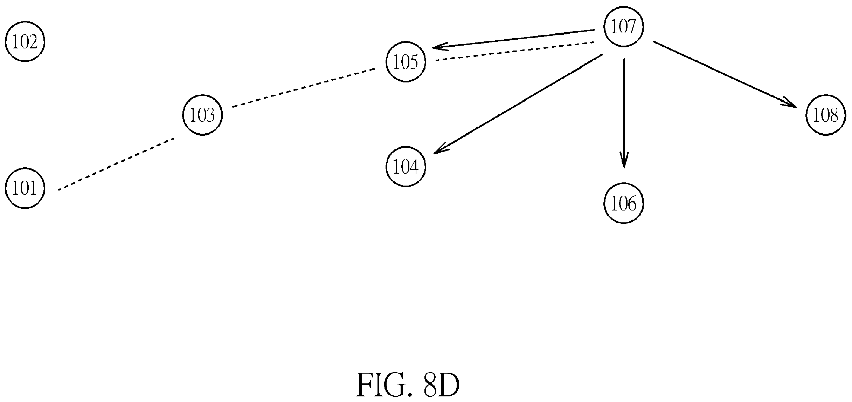

Reference is made to FIGs. 8A-8D, which illustrate packet flows over a virtual link network according to one embodiment of the present disclosure. The virtual link network includes device 101, 103, 105 and 107. In FIG.8A, the device 101 starts the packet transmission by broadcasting packet with the pre-defined schedule of the virtual link network. Both the devices 102 and 103 are in the transmission range. Since the device 102 is not activated into virtual link mode, it keeps in sleep state and will not receive the broadcasting packet from the device 101. On the other hand, the device 103 of the virtual link network can receive the packet from the device 101 since it is in virtual link mode. In FIG.8B, the device 102 does not re-broadcast this packet since it does not receive it, whereas the device 103 re-broadcasts the packet and transmits the packet to the devices 101,102,104 and 105 which are in the transmission range of the device 103. Similarly, the devices 102 and 104 do not receive this packet since they are not members of the virtual link network and do not activate the virtual link mode. Sequentially, the device 101 receives the same packet it sent out previously. Since there is only one transmission route in the virtual link network, the device 101 can be very sure that this packet is from neighbor device, which means that its neighbor device has received the packet it send out. Therefore, this packet can be treated as "acknowledgement" message. That is, when the device 101 receives the re-broadcast packet from the device 103, the device 101 does not re-broadcast the packet again as it does in the original mesh network, but starts to send the next packet. On the other hand, if the device 101 does not get the same packet re-broadcasted from its neighbor device, the device 101 knows that the packet transmission is not successful, so that the device 101 re-broadcasts the packet again. With such manner, the devices 105 and 107 with the virtual link mode will receive the packet as shown in FIG. 8C. Finally, when the packet arrives at the device 107, the device 107 re-broadcasts the packet to neighbor devices, so that the device 105 knows that the packet transmission is successes as shown in FIG. 8D. Based on the packet transmission over the virtual link network, packets are transmitted sequentially from the source device (i.e. the device 101) to the destination device (the device 107) even it is still under packet flooding mesh network.

As abovementioned, the devices with virtual link mode (i.e. in virtual link network) are operated in a fast schedule time interval compared to the normal mode in the original mesh network, so as to increase the communication data rate. This rule can keep the simplicity of firmware design since the transmission methodology keeps the same as original mesh network. Moreover, since a device of the virtual link network will only have two neighbor devices, namely one up-link and one down-link, the transmission time of each device within the active time period can be set to avoid the transmission collision.

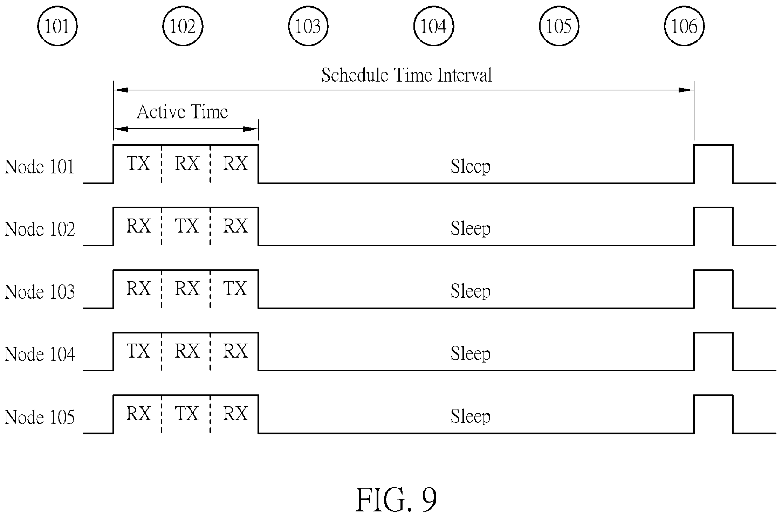

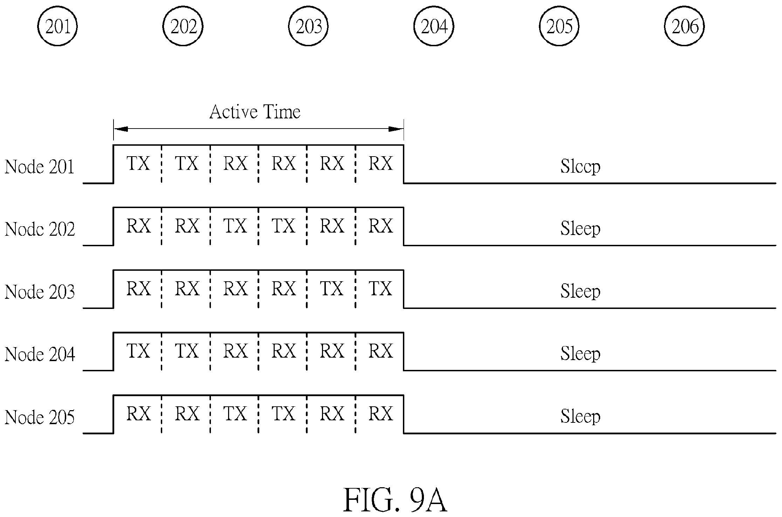

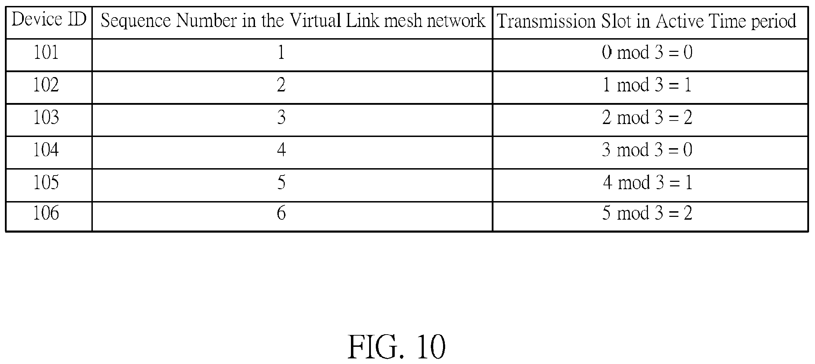

Reference is made to FIG. 9, which illustrates an example of non-collision transmission for a virtual link network. The transmission collision may occur at the time when one device gets multiple transmission packets from different neighbor devices at the same time. As a result, an objective of the present disclosure is to solve the transmission collision in the active time of schedule time interval of the virtual link mesh network. In FIG. 9, a packet transmission time "TX" of the active time of one device (i.e. the device 102) is staggered with the other two neighbor devices (the devices 101 and 103), to avoid packet transmission collision with the neighbor devices. In an embodiment, since the supervisor device (i.e. the device 107) has the route table, the supervisor node assigns every device of the virtual link network of a sequence number when it sends the command to activate the virtual link mode of the members of the virtual link network. Reference is made to FIG. 10, which illustrates sequence number assignment for the virtual link network according to one embodiment of the present disclosure. Every device can MOD its sequence number by 3, and thereof knows its transmission time "TX" within the active time period according to the MOD results. For example, the supervisor device assigns sequence numbers 0-5 to the devices 101-106 respectively, and therefore each device obtains MOD result "0", "1" or "2" each indicates a transmission time at first, second and third transmission time slot of the active time period. Referring back to FIG. 9, the devices 101 and 104 with sequence number "0" and "3" may transmit a packet in the first time slot. The devices 102 and 105 with sequence number "1" and "4" may transmits the packet in the second time slot, and the devices 103 and 106 with sequence number "2" and "5" may transmit the packet in the third time slot. With transmission time assignment, transmission collision is avoided and the active time can be made as short as possible.

Unlike the conventional packet flooding transmission must keep a reasonable long active time period to allow every device to randomly transmit a packet in order to prevent the transmission collision, which causes power waste. The pre-defined schedule of the virtual link network is much faster than the normal schedule of the mesh network, with the new transmission time assignment, the active time period can be minimize and save power consumption. Since the active time period must be smaller than schedule interval, the smaller the active time interval, the faster the schedule could be, such that the non-collision transmission mechanism will increase the transmission data rate. Moreover, the bigger the packet size, the longer the transmission time is. Therefore, it is necessary to prevent the transmission collision in the original mesh network. With the non-collision transmission methodology, the virtual link network could have a bigger packet size with more user data in it, and thus increase the data rate of the virtual link network.

The above method can establish a half-duplex virtual link between 2 nodes with uni-direction sequential mesh transmission. For full-duplex link, by extending the TX and RX slot of each node to 2 slot as shown in FIG 9A, each node can receive and broadcast packets from its up-link or down-link node in 1 slot in the same schedule interval, so the 2 uni-direction sequential mesh link can co-exist at the same time and forming a full-duplex link.

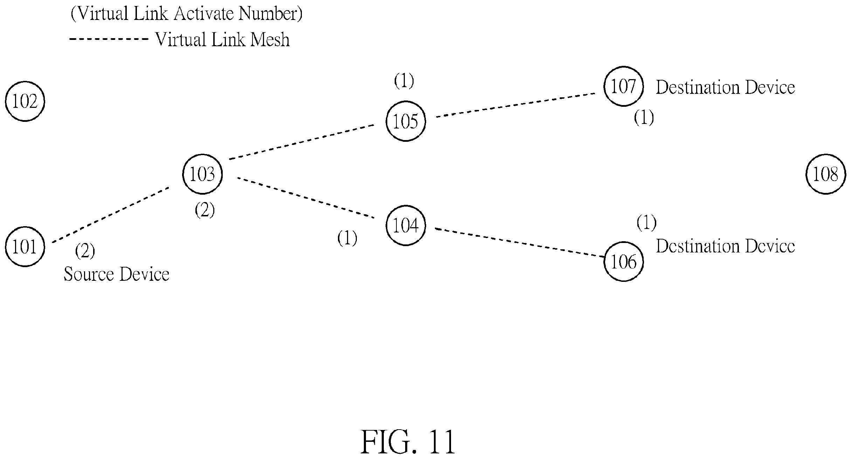

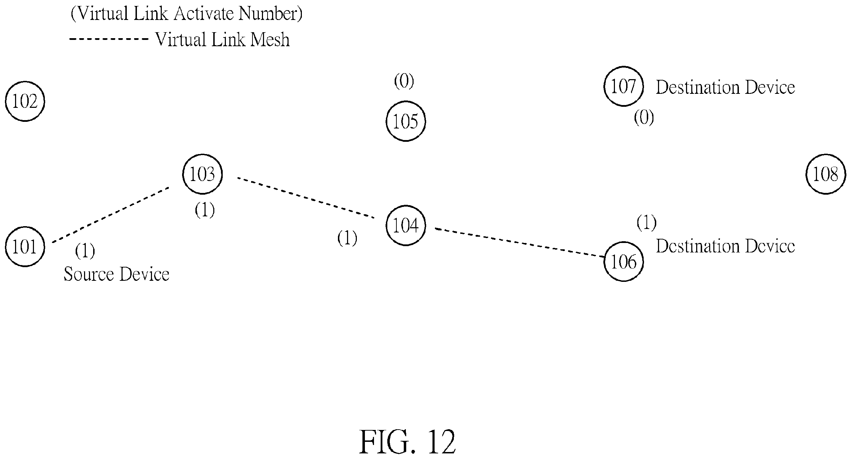

In an embodiment, the virtual link network can be used for packet transmission from a single source device to multiple destination devices. Reference is made to FIG. 11. The first virtual link is from the devices 101, 103, 105 to 107, and the second virtual link is from the devices 101, 103, 104 to 106 which are activated with the virtual link mode by a supervisor device (i.e. the device 107) or by different supervisor devices. Since all the packets are broadcasted, the packet can still be transmitted sequentially to two destination devices with the maximum data rate. In this case, device does not have to remember which virtual link the device belongs to or which supervisor device activates the virtual link mode for the device. The devices just count how many times it is activated. For example, the devices 101 and 103 have been activated the virtual link mode twice, and the devices 104,105,106 and 107 have been activated once. Reference is made to FIG. 12, which illustrates an example of virtual link cancelation. In FIG. 12, the supervisor device (i.e. the device 107) can send a deactivation command to devices of the virtual link network to stop the virtual link mode and to be operated in the normal mode of the original mesh network. For example, the supervisor device of the first virtual link sends the deactivation command to the devices it activated, and thus the devices 101, 103, 105 and 107 which get the deactivation command will count-down its activation number by one. If the activation number is decreased to "0", it will deactivate the virtual link mode and work in the normal mode. Otherwise, devices 101 and 103 keep the virtual link mode activated. As shown in FIG. 12, the second virtual link is still existed after the first virtual link has been cancelled. The activation and deactivation method well controls the 1-source to 2-destination transmission.

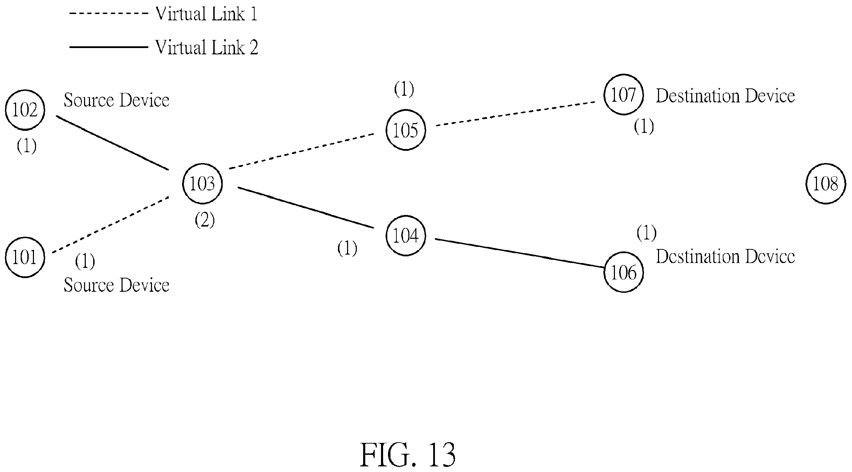

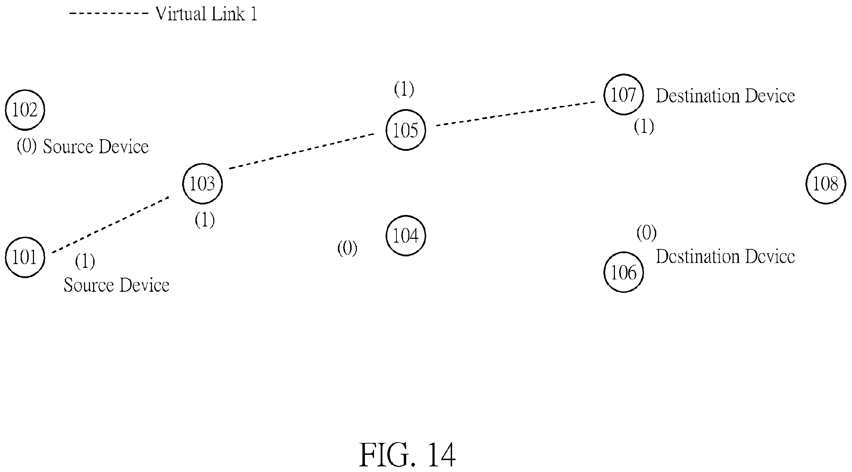

In other embodiments, the virtual link network can be used for packet transmission from multiple source devices to multiple destination devices. Reference is made to FIG. 13, which illustrates an example of two independent virtual links with two different source devices. Since the packet is flooded in the two virtual links, each destination device will get the packets from the two source devices, so it is necessary to add a link identity in the data packet. Thus, the destination devices can distinguish the received packets is from which source node, and therefore choose the correct one. This link identity can be assigned to the source device by the supervisor device when setting up the virtual link mode, such that the source devices include the link identity in the packets. As a result, the destination devices can identify the received packet with the link identity. In addition, FIG. 14 illustrates an example that the second virtual link is canceled by its supervisor device with the same cancellation method as abovementioned. It should be noted that the supervisor device only deactivates virtual link mode of the devices which are activated by it.

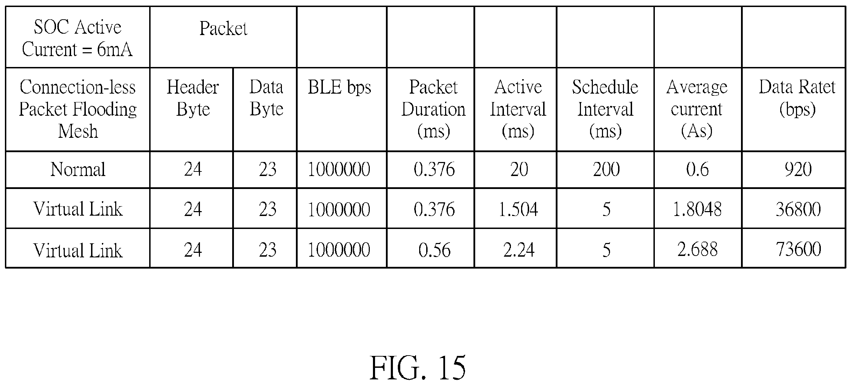

FIG. 15 illustrates a comparison of the original mesh network and virtual link network. With 4.5 times power consumption (2.688/0.6 =4.5), the virtual link network could have 80 times data rate (73600/920 =80) of the original mesh network. As a result, the virtual link network greatly increases the large data transmission efficiency.

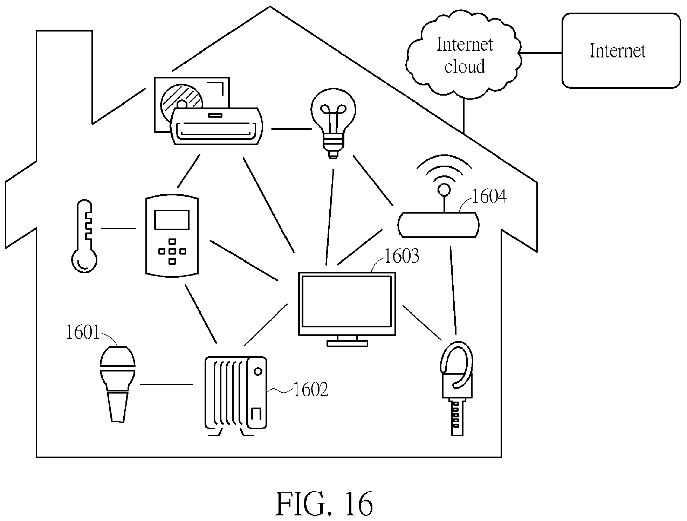

Fig. 16 illustrates an example of IOT home application which always needs to send data to Internet. In IOT home network, it includes a hub device 1604, to collect information from every device and communication with Internet cloud. The hub device 1604 will be a good supervisor device since it is usually with strong CPU and power-line powered for the hub function. In FIG. 16, a virtual link for transmitting voice data from microphone device 1601 to hub device 1604 though appliance device 1602 and media device 1603 is established by the hub device 1604, and then to Internet cloud for a voice recognition and instruction function. Since the microphone device 1601, most of the time, works in the normal mode of the original mesh network with low power consumption, and sometimes be activated in virtual link mode to work as a voice input device for a short period of time, the power consumption of microphone device 1601 is still dominated by the power consumption of normal mode of the original mesh network.

The present disclosure provides a new methodology to realize large data transmission in a packet flooding mesh network with the following Pros:
1. Still keeping all transmission by the original packet flooding topology;
2. Still keeping the simplicity of the firmware design of the each device;
3. Enhancing the device-to-device transmission data rate to the maximum physical capability of the packet flooding mesh network;
4. Keeping the sequential packet transmission within the packet flooding mesh network; and
5. Avoiding packet transmission collision with small active time period for power saving and the enhancement of the transmission efficiency.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 30.

In conclusion, the present invention aims at establishing a device to device virtual communication link over the conventional packet flooding mesh network, so that data packets can be transmitted sequentially and with maximum data rate of the physical capability of the network.

## Claims

1. A method of packet transmission for a supervisor node in a mesh network with connectionless packet flooding transmission, **characterized by** the method comprising:
requesting a neighbor list of a node of the mesh network, wherein the neighbor list indicates at least a neighbor node of the mesh network which is distributed in a coverage of the node (410);
obtaining the neighbor list from every nodes of the mesh network (420);
establishing a route table for every nodes of the mesh network according to the obtained neighbor lists (430); and
establishing a transmission route from a source node to a destination node of the mesh network according to the route table when a request for transmitting a large amount of data to the destination node is received from the source node (440).

2. The method of claim 1, **characterized in that** the neighboring list includes a radio frequency (RF) power or a power status of the neighbor node.

3. The method of claim 1, further comprising:
transmitting a command to every node on the transmission route, for indicating the nodes on the transmission route to be operated in a virtual link mode, wherein the nodes operated in the virtual link mode perform packet transmission and reception according to a pre-defined schedule configured by the supervisor node, or a predefined schedule defined in the firmware of the nodes.

4. The method of claim 3, further comprising:
configuring every node on the transmission route with a sequence number; and
configuring every node operated in the virtual link mode with a specific transmission time according to the configured sequence number, whereby the configured node transmits a packet only at the specific transmission time within the pre-defined schedule.

5. The method of claim 4, further comprising:
transmitting a deactivation command to the nodes operated in the virtual link mode, for indicating the nodes operated in the virtual link mode to be operated in the normal mode, wherein the nodes operated in the normal mode transmit packets randomly.

6. The method of claim 1, further comprising:
configuring a link identity for indicating the transmission route to the source node when establishing the transmission route.

7. The method of claim 1, further comprising:
establishing the neighbor list indicating at least a neighbor node of the mesh network which is distributed in a coverage of a supervisor node of the mesh network.

8. The method of claim 1, **characterized in that** the supervisor node is any node of the mesh network.

9. A method of packet transmission for a node in a mesh network with connectionless packet flooding transmission, **characterized by** the method comprising:
establishing a neighbor list indicating at least a neighbor node of the mesh network which is distributed in a coverage of the node (410); and
transmitting the neighbor list to a supervisor node of the mesh network when receiving a neighbor list request from the supervisor node.

10. The method of claim 9, **characterized in that** the neighbor list includes radio frequency (RF) power or power status of the neighbor node.

11. The method of claim 9, **characterized in that** the step of establishing the neighbor list comprises:
transmitting a first packet to the neighbor node; and
receiving a second packet in response to the first packet from the neighbor node, wherein the second packet includes an identity number of the neighbor node.

12. The method of claim 9, further comprising:
receiving a command for indicating the node to be operated in a virtual link mode from the supervisor node, wherein the node operated in the virtual mode performs packet transmission and reception according to a pre-defined schedule configured by the supervisor node or a predefined schedule defined in the firmware of the nodes.

13. The method of claim 12, further comprising:
being configured a sequence number by the supervisor node; and
determining a specific transmission time of the pre-defined schedule according to the configured sequence number
transmitting a packet only at the specific single or multiple transmission time slot within the pre-defined schedule.

14. The method of claim 12, further comprising:
receiving a deactivation command from the supervisor node; and
switching from the virtual link mode to be operated in a normal mode, wherein the node operated in the normal mode transmits a packet randomly.

15. The method of claim 12, further comprising:
transmitting a packet to the neighbor node; and
determining the packet as an acknowledgement for the packet when receiving the same packet from the neighbor node.

16. The method of claim 12, further comprising:
transmitting a request for a large amount of data transmission to a destination node of the mesh network, to the supervisor node;
being configured a link identity for indicating a transmission route from the node to the destination node, by a supervisor node; and
including the link identity in a packet for transmission.

17. The method of claim 12, further comprising:
receiving a packet including a link identity from the neighbor node, wherein the link identity indicates a transmission route from a source node to the node; and
determining the source node on the transmission route according to the link identity.

18. The method of claim 9, **characterized in that** the supervisor node is any node of the mesh network.

19. The method of claim 12, further comprising:
being operated in both the virtual link mode and a normal mode of the mesh network with different schedules and different data packet size.
